(19) Europäisches Patentamt
European Patent Office
Office européen des brevets

(11) **EP 4 327 964 A1**

(12) **EUROPEAN PATENT APPLICATION**

(43) Date of publication:
**28.02.2024 Bulletin 2024/09**

(21) Application number: **23187455.3**

(22) Date of filing: **25.07.2023**

(51) International Patent Classification (IPC):
**B22F 3/15** (2006.01)   **B22F 5/00** (2006.01)
**B22F 5/04** (2006.01)   **B33Y 70/00** (2020.01)
**C22C 1/02** (2006.01)   **C22C 1/04** (2023.01)
**C22C 14/00** (2006.01)   **B22F 3/105** (2006.01)

(52) Cooperative Patent Classification (CPC):
**C22C 14/00; B22F 3/105; B22F 3/15; B22F 5/009;
B22F 5/04; B33Y 70/00; C22C 1/02; C22C 1/0458**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.08.2022 GB 202212378**

(71) Applicant: **Rolls-Royce plc
London N1 9FX (GB)**

(72) Inventors:
• **Lister, Samuel T.
Derby, DE24 8BJ (GB)**
• **Baxter, Gavin J.
Derby, DE24 8BJ (GB)**
• **Jackson, Martin
Derby, DE24 8BJ (GB)**

(74) Representative: **Rolls-Royce plc
Intellectual Property Dept SinA-48
PO Box 31
Derby DE24 8BJ (GB)**

(54) **TITANIUM ALLOY AND METHODS OF MANUFACTURE**

(57)   A titanium alloy comprising Al 4.78 to 6.44 wt.%; V 3.65 to 5.15 wt.%; Mo 1.32 to 3.58 wt.%; Cr 0.75 to 2.28 wt.%; Fe 0.00 to 0.42 wt.%; C 0.00 wt.% to 0.10 wt.%; S 0.00 wt.% to 0.10 wt.%; N up to 500 ppm; O up to 2000 ppm and H up to 150 ppm; the balance being Ti and incidental elements and unavoidable impurities. Such a titanium alloy is useful for manufacturing gas turbine engine components including turbine blades and stators.

FIG. 1

## Description

### FIELD

The present invention relates to a titanium alloy and a method of preparing same. The titanium alloy is useful for manufacturing titanium alloy articles, for example titanium alloy components of gas turbine engines.

### BACKGROUND

Titanium, Ti, is the 22nd element of the Periodic Table of Elements. It is a transition metal with notably high strength and corrosion resistance. It is commonly used as a catalyst in the form of titanium dioxide, titanium trichloride or titanium tetrachloride. However, it is also often alloyed with aluminium, vanadium, molybdenum, chromium or other elements to manufacture strong and lightweight materials for various aerospace, automotive, medical and other industrial applications.

Commercially available titanium alloys include Ti-64, Ti-6242 and Ti-6246, which can typically be produced in ingot form via melt or hot isostatic pressing (HIP) routes and then forged and machined to a desired shape and geometry.

European patent EP 408313 B1 discloses a titanium alloy, SP700, which is described as an alloy invented by NKK Corporation of Ogawa, Japan that can be used in superplastic forming. SP700 comprises 2.1 to 3.7 wt.% vanadium, 3.42 to 5.0 wt.% aluminium, at least one of the elements selected from the group consisting of iron, cobalt and chromium in proportions of weight satisfied by the equations; 0.85% < X % < 3.15% and 7% < Y % < 13% wherein X% is equal to the % of Fe + % Co + (0.9 x % Cr), and Y% = (2 x % Fe) + (2 x % Co) + (1.8 x % Cr) + (1.5 x % V) + % Mo.

The present invention provides a titanium alloy with improved tensile toughness properties, or at least provides a useful alternative to known titanium alloys.

### SUMMARY

The present invention provides a titanium alloy, a titanium alloy component, a method of preparing a titanium alloy, and a method of preparing a titanium alloy component, as set out in the appended claims.

According to a first aspect there is provided a titanium alloy comprising the following composition: Al 4.78 to 6.44 wt.%; V 3.65 to 5.15 wt.%; Mo 1.32 to 3.58 wt.%; Cr 0.75 to 2.28 wt.%; Fe 0.00 to 0.42 wt.%; C 0.00 wt.% to 0.10 wt.%; S 0.00 wt.% to 0.10 wt.%; N up to 500 ppm; O up to 2000 ppm and H up to 150 ppm; the balance being Ti and incidental elements and unavoidable impurities.

The titanium alloy of the present invention has useful tensile toughness properties which include improvements over existing titanium alloys in the as-produced condition.

In some embodiments, the titanium alloy comprises: Al 4.84 to 6.33 wt.%; V 3.90 to 5.10 wt.%; Mo 1.76 to 3.30 wt.%; Cr 1.00 to 2.10 wt.%; Fe 0.00 to 0.42 wt.%; C 0.01 wt.% to 0.10 wt.%; S 0.00 wt.% to 0.10 wt.%; N up to 500 ppm; O up to 2000 ppm and H up to 150 ppm; the balance being Ti and incidental elements and unavoidable impurities.

In some embodiments, the titanium alloy comprises: Al 4.95 to 6.23 wt.%; V 3.75 to 5.00 wt.%; Mo 2.20 to 2.75 wt.%; Cr 1.25 to 1.75 wt.%; Fe 0.00 to 0.40 wt.%; C 0.01 wt.% to 0.10 wt.%; S 0.001 wt.% to 0.10 wt.%; N up to 500 ppm; O up to 2000 ppm and H up to 150 ppm; the balance being Ti and incidental elements and unavoidable impurities.

In some embodiments, the titanium alloy is in a physical form that is suitable for use in a powder-based manufacturing process.

In some embodiments, the titanium alloy is in the form of a powder suitable for use in hot isostatic pressing (HIP) or metal injection moulding (MIM).

In some embodiments, the titanium alloy is in a physical form that is suitable for use in an additive manufacturing process.

In some embodiments, the titanium alloy is in the form of a wire, a rod or a powder.

According to a second aspect there is provided a titanium alloy article that comprises the titanium alloy of the first aspect.

In some embodiments, the titanium alloy article is a gas turbine component.

In some embodiments, the gas turbine component is a compressor disk, a bladed disk, a casing, a turbine blade or a stator.

According to a third aspect there is provided a method of preparing a titanium alloy of the first aspect, the method comprising: combining Ti-6Al-4V and Ti-5Al-5V-5Mo-3Cr in powder form in a ratio of 40:60 to 60:40 to form a titanium alloy powder blend; and sintering the titanium alloy powder blend to form a titanium alloy of the first aspect.

In some embodiments, the Ti-6Al-4V and the Ti-5Al-5V-5Mo-3Cr are combined in a ratio of 45:55 to 55:45.

In some embodiments, the Ti-6Al-4V and the Ti-5Al-5V-5Mo-3Cr are combined in a ratio of 50:50.

In some embodiments, the titanium alloy powder blend is sintered using a field assisted sintering technique.

In some embodiments, the titanium alloy powder blend is sintered using a pressure of 35 MPa, a heating rate of 25 to 200 °C/min, and a colling rate of 10 to 200 °C/min.

According to a fourth aspect there is provided a method of preparing a titanium alloy of the first aspect, the method comprising: combining the elements in the amounts of the first aspect; and casting the combination to form a titanium alloy of the first aspect.

According to a fifth aspect there is provided a method of preparing a titanium alloy article of the second aspect, the method comprising casting the article from a titanium alloy of the first aspect in solid form, or applying energy to a titanium alloy in powder form in an additive manufacturing process.

The skilled person will appreciate that, except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

The term "alloy" as used herein means a mixture of chemical elements of which at least one is a metal. For example brass is an alloy of copper and zinc, sterling silver is an alloy of silver and copper, steel is an alloy of iron and carbon, and silicon steel is an alloy of iron and silicon.

The term "ultimate tensile strength" or "UTS" as used herein means the maximum stress that a material can withstand while being stretched or pulled before breaking. In brittle materials the UTS is close to the yield point, whereas in ductile materials the UTS can be higher. Ultimate tensile strength is also known as tensile strength (TS) or ultimate strength.

The term "sintering" as used herein means the process of compacting and forming a solid mass of material by heat or pressure without melting it to the point of liquefaction.

The term "field assisted sintering", "field assisted sintering technique/technology", or "FAST" as used herein means a low voltage, direct current (DC) pulsed current activated, pressure-assisted sintering, and synthesis technique. Field assisted sintering is also known as spark plasma sintering (SPS), pulsed electric current sintering (PECS) and plasma pressure compaction (P2C).

The term "hardness" as used herein is a measure of the resistance to localized plastic deformation induced by either mechanical indentation or abrasion. Hardness is commonly measured by the Vickers hardness test and hardness mentioned by that test is commonly referred to as Vickers hardness.

Throughout this specification and in the claims that follow, unless the context requires otherwise, the word "comprise" or variations such as "comprises" and "comprising", will be understood to imply the inclusion of a stated integer or group of integers but not the exclusion of any other stated integer or group of integers.

## BRIEF DESCRIPTION OF THE DRAWINGS

Embodiments will now be described by way of example only, with reference to the Figures, in which:

Figure 1 is a schematic representation of the methods of preparing a titanium alloy of the present invention;

Figure 2 is graph that compares the tensile strength and tensile elongation of a titanium alloy of the present invention with those of certain known titanium alloys, i.e. Ti-64 FAST, Ti-64 MA, Ti-5553 STA, Ti-5553 BASCA and Ti-5553 FAST. The dashed ellipse indicates a region of excellent tensile strength and excellent tensile elongation, i.e. for suitability as a material from which to manufacture titanium alloy articles such gas turbine engine components, including turbine blades and stators. These are the results of Example 3.

Figure 3 is graph that compares the molybdenum equivalence of a titanium alloy of the present invention with that of certain known titanium alloys, i.e. Ti-6242, Ti-64, Ti-6246, Ti-575, Ti-407, SP-700 and Ti-5553. The results are shown in Example 4.

Figure 4 is a graph that compares the hardness of titanium alloys prepared from various ratios of Ti-6Al-4V and Ti-5Al-5V-5Mo-3Cr, alongside comparison with the measured hardness values for vacuum arc melted (VAM) material with the same composition as the 50:50 mix.

Figure 5 is a graph that compares the amount of each element (in wt.%) present in the alloy, as the mass fraction of Ti-5553 is altered (i.e. the mix ratio). Predicted nominal, maximum and minimum values are shown for each element, values were calculated using ThermoCalc™ thermodynamic modelling software.

Figure 6 is a graph that compares the measured Charpy impact energy values of a titanium alloy of the present invention with that of certain known titanium alloys, i.e. Ti-64 in various conditions and SP-700.

## DETAILED DESCRIPTION

Aspects and embodiments of the present invention will now be discussed with reference to the accompanying figures. Further aspects and embodiments will be apparent to those skilled in the art.

The present invention provides a titanium alloy, a titanium alloy component, methods of preparing a titanium alloy, and -methods of preparing a titanium alloy component.

### The new titanium alloy

The titanium alloy of the present invention comprises the following composition:

| | |
|---|---|
| Al | 4.78 to 6.44 wt.%; |
| V | 3.65 to 5.15 wt.%; |
| Mo | 1.32 to 3.58 wt. %; |
| Cr | 0.75 to 2.28 wt.%; |
| Fe | 0.00 to 0.42 wt.%; |
| C | 0.00 wt.% to 0.10 wt.%; |
| S | 0.00 wt.% to 0.10 wt.%; |
| N | up to 500 ppm; |
| O | up to 2000 ppm; and |
| H | up to 150 ppm; |

the balance being Ti and incidental elements and unavoidable impurities.

Other alloy elements which may be present in the aforementioned titanium alloy as impurities, for example, selected from any of the following:

Si, P, Mg, Cu, Sn, Nb, Hf, Bi, Ru, Pd, Y, Co, Ta, Ni, B, Mn, W and/or Zn should each have a wt.% of less than 0.1, with the sum of all impurities being less than 0.4 wt.%.

The titanium alloy of the present invention, which is in solid form, shows improved strength and ductility that is suitable for its use in the manufacture titanium alloy articles, for example of titanium alloy gas turbine engine components.

The improved strength can enable gas turbine engine components formed from same to be exposed to higher temperatures, which can enable the gas turbine engine to be operated with greater efficiency and improved specific fuel consumption (SFC). It may even allow gas turbine engine components to be re-designed in a manner that includes less material, thereby reducing weight to improve specific fuel consumption (SFC) and save resources.

The favourable strength and ductility properties of the titanium alloy of the present invention may be attributed to the presence of fine-scale alpha laths, despite relatively slow-cooling.

No evidence of the formation of omega phase has been observed i.e. no evidence of streaked spots indicating the presence of such a phase has been observed.

In some embodiments the titanium alloy of the present invention comprises the following composition:

| | |
|---|---|
| Al | 4.84 to 6.33 wt.%; |
| V | 3.90 to 5.10 wt.%; |
| Mo | 1.76 to 3.30 wt. % ; |
| Cr | 1.00 to 2.10 wt.%; and |
| Fe | 0.00 to 0.42 wt.%; |
| C | 0.01 wt.% to 0.10 wt.%; |
| S | 0.00 wt.% to 0.10 wt.%; |
| N | up to 500 ppm; |
| O | up to 2000 ppm and |
| H | up to 150 ppm; |

the balance being Ti and incidental elements and unavoidable impurities.

In some embodiments the titanium alloy of the present invention comprises the following composition:

| | |
|---|---|
| Al | 4.95 to 6.23 wt.%; |
| V | 3.75 to 5.00 wt.%; |

(continued)

| | |
|---|---|
| Mo | 2.20 to 2.75 wt.%; |
| Cr | 1.25 to 1.75 wt.%; and |
| Fe | 0.00 to 0.40 wt.%; |
| C | 0.01 wt.% to 0.10 wt.%; |
| S | 0.001 wt.% to 0.10 wt.%; |
| N | up to 500 ppm; |
| O | up to 2000 ppm; and |
| H | up to 150 ppm; |

the balance being Ti and incidental elements and unavoidable impurities.

The titanium alloy of the present invention with the aforementioned compositional range is in the form of a solid. However, it may be converted to a physical form that is suitable for use in a desired manufacturing process using any suitable art-known method for that.

In some embodiments the titanium alloy is in a physical form that is suitable for use in a powder-based manufacturing process, for example field assisted sintering technology (FAST), hot isostatic pressing (HIP) or metal injection moulding (MIM).

In some embodiments the titanium alloy is in a physical form that is suitable for use in an additive manufacturing process, for example the titanium alloy is in the form of a wire, a rod or a powder.

In some embodiments the titanium alloy is in a physical form that is suitable for use in a manufacturing process selected from laser-based additive manufacturing (LBAM), direct laser deposition (DLD), Laser powder bed fusion (LPBF), Selective Laser Sintering (SLS) electron beam additive manufacturing (EBAM), laser engineered net shaping (LENS), selective laser melting (SLM), SLM three-dimensional printing (SLM 3D printing), direct metal laser sintering (DMLS), direct metal laser sintering three-dimensional printing (DML 3D printing), electron beam melting (EBM), direct metal deposition (DMD), direct metal tooling (DMT), direct metal tooling three-dimensional printing (DMT 3D printing), construction laser additive direct (CLAD), ion fusion formation (IFF), wire arc additive manufacturing (WAAM), shaped metal deposition (SMD), Laser Blown Powder Directed Energy Deposition (LBP-DED), flash sintering, cold spray and field assisted sintering technology (FAST).

## Articles made from the new titanium alloy

The titanium alloy article of the second aspect of the present invention comprises or in some instance consists of the titanium alloy of the first aspect of the present invention.

In some embodiments, the aluminium alloy article is a gas turbine engine component. The gas turbine engine component may, for example, a compressor disk, a bladed disk, a casing, a fan blade or a stator.

In some embodiments, the aluminium alloy article is a tool or it is piece of sporting equipment e.g. a gold club.

## Preparation of the new titanium alloy

The titanium alloy of the present invention can be prepared by a method that involves combining Ti-6Al-4V and Ti-5Al-5V-5Mo-3Cr in powder form in ratios between 40:60 (30:70) and 60:40 (65:35) to form a titanium alloy powder blend, and then sintering the titanium alloy powder blend to form the titanium alloy of the present invention. Alternatively titanium alloy of the present invention can be prepared by casting same from the constituent elements.

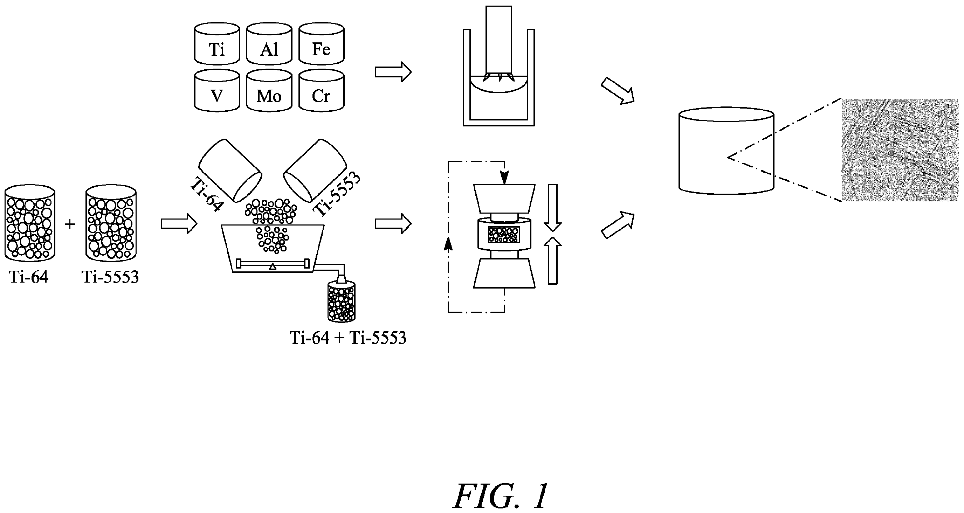

Both methods are summarised in **Figure** 1 of the drawings.

As mentioned above, Ti-6Al-4V or Ti-64, is a known titanium alloy whose composition and method of manufacture is disclosed in "Semiatin, S.L., Knisley, S.L., Fagin, P.N., Zhang, F., Barker, D.R., 2003. Microstructure Evolution during Alpha-Beta Heat Treatment of Ti-6Al-4V. Metall. Mater. Trans. A Phys. Metall. Mater. Sci. 34A, 2377-2386. It comprises 3.5 to 4.5 wt.% vanadium, 5.5 to 6.75 wt.% aluminium, 0.3 wt.% iron, 0.2 wt.% oxygen, 0.08 wt.% carbon, 0.05 wt.% nitrogen, 0.015 wt.% hydrogen, 0.05 wt.% yttrium and the balance, other than incidental elements and unavoidable impurities, titanium. Ti-6-4 is available in powder form from a range of commercial atomisation companies, including, but not limited to AP&C, Tekna and Carpenter Additive.

Ti-5Al-5V-5Mo-3Cr or Ti-5553 is another known titanium alloy. This titanium alloy and its preparation are disclosed in Manda et al "Ti-5Al-5Mo-5V-3Cr and similar Mo equivalent alloys: First principles calculations and experimental investigations", Journal of Applied Research and Technology, Vol 15 (2017) pages 21-26. In this article Manda et al reports the stability of Ti-5Al-5Mo-5V-3Cr and similar Mo equivalent alloys using first principles calculations. Ti-5Al-5V-5Mo-3Cr is commercially available in powder form from AP&C or GKN Additive Materials.

The Ti-6Al-4V and the Ti-5Al-5V-5Mo-3Cr are combined in ratios between 40:60 (30:70) to 60:40 (35:65) to form a titanium alloy powder blend, i.e. from 40 (30) wt.% Ti-6Al-4V to 60 (70) wt.% Ti-5Al-5V-5Mo-3Cr to 60 (65) wt.% Ti-6Al-4V to 40 (35) wt.% Ti-5Al-5V-5Mo-3Cr.

In some embodiments the Ti-6Al-4V and the Ti-5Al-5V-5Mo-3Cr are combined in a ratio of 45:55 to 55:45, for example in a ratio of 50:50.

The Ti-6Al-4V and the Ti-5Al-5V-5Mo-3Cr are combined using any suitable equipment for the purpose, for example using a screw mixer, blade mixer or V-blender. The powders may be mixed to ensure the resulting titanium alloy powder blend is a homogenous mixture of the powders.

The titanium alloy powder blend is sintered to form the titanium alloy of the present invention. The sintering can be performed using any suitable equipment and technique for the purpose.

In some embodiments the titanium alloy the powder mix is sintered using a field assisted sintering technique or "FAST". Such a sintering method involves low voltage, direct current (DC) pulsed current activated, pressure-assisted sintering. Field assisted sintering is also known as spark plasma sintering (SPS), pulsed electric current sintering (PECS) and plasma pressure compaction (P2C). The technique is described in N. S. Weston, F. Derguti, A. Tudball, and M. Jackson, "Spark plasma sintering of commercial and development titanium alloy powders," J. Mater. Sci., vol. 50, no. 14, pp. 4860-4878, 2015.

While not wanting to be bound by theory, the effect of the electric current during field assisted sintering is thought to enhance diffusion, which may be at least in part responsible for the favourable properties that have been observed when using field assisted sintering.

In some embodiments the titanium alloy powder mix is field assisted sintered using, a dwell temperature of 850 to 1200 °C, a dwell time of 0 to 90 minutes, a pressure range of between 20 and 50 MPa, , a heating rate range of 25 to 200 °C/min, a cooling rate range of 10 to 200 °C/min, a pulse pattern of 15 ms on and 5 ms off.

Other sintering methods include powder sintering e.g. hot isostatic pressure (HIP) and additive manufacturing (AM).

In some embodiments the titanium alloy may be produced in solid form as a cast alloy which may be formed from the individual elements or from any combination of pre-alloyed mixes of the elements. Different casting methods for producing the alloy , include, but are not limited to: Vacuum Arc Melting (VAM), Vacuum Arc Remelting (VAR), Cold Hearth Melting (CHM) and Vacuum Induction Melting (VIM)

In some embodiments the titanium alloy may be produced as a powder which is atomised with the chemistry matching the ranges described in the present disclosure. The feedstock for the atomisation processes (including Electrode Induction Gas Atomisation (EIGA) or Plasma Rotating Electrode Processing (PREP)) uses bars or ingots of the alloy that have been produced using the methods described above or wires which have been drawn down to specific diameters from these bars or ingots (e.g. Plasma Atomisation (PA)). Some atomisation processes may also produce the powder directly from the elements or combinations of the elements such as is the case in gas atomisation (GA) processes.

**Preparation of gas turbine engine components from the new titanium alloy**

The titanium alloy of the present invention is useful to manufacture titanium alloy articles, especially titanium alloy gas turbine engine components, including compressor discs, blade disks, casings, fan blades or stators.

Titanium alloy articles of the second aspect, e.g. titanium alloy gas turbine engine components, can be prepared using a variety of manufacturing methods that are known in the art.

In some embodiments the titanium alloy is in a physical form that is suitable for use in a powder-based manufacturing process, for example field assisted sintering technology (FAST), hot isostatic pressing (HIP) or metal injection moulding (MIM).

In a powder-based manufacturing process a metal powder, which may be a shaped powder pre-form, is subjected to heat and pressure to melt or sinter the metal powder particles together to form the desired article, component or structure. For further information please refer to "Powder Metallurgy Technology" by G S Upadhyaya, Cambridge Int Science Publishing (1997); also "Powder Metallurgy", Chapter 4 in "A Textbook of Manufacturing Technology: Manufacturing Processes" by R K Rajput (2007); also "Powder Metallurgy; Science, Technology and Applications", P C Angelo and R Subramanian (2008), pub. PHI Learning Pvt. Ltd.; also WB James, "Powder Metallurgy Methods and Applications", in ASM Handbook (Ed. P Samal and J Newkirk), volume 7 (2015) pages 9 to 19, the contents of which are incorporated herein by reference.

In some embodiments the titanium alloy is in a physical form that is suitable for use in an additive manufacturing process, for example the titanium alloy is in the form of a wire, a rod or a powder.

In an additive manufacturing process for creating a metal article, component or structure, metal powder or a metal body such as, for example, a rod or wire is fed into a melt pool that is heated, typically by a laser, electron beam or plasma arc. The machine head moves the heat source and metal feed to deposit layers of metal in the desired shape, supported on a substrate or bed, which is suitably metallic. The process typically occurs in a vacuum or inert atmosphere to restrict oxidation of the metals. For further information please refer to "Additive Manufacturing Technologies" by Gibson, Rosen and Stucker (2015), published by Springer, the contents of which are incorporated herein by reference. For example, a review of directed energy deposition (DED) processes is contained in Gibson et al., "Directed Energy Deposition Processes", on pages 245-268 of the said "Additive Manufacturing Technologies"; the contents of that chapter are also specifically incorporated herein by reference. Also, C K Chua et al., "3D Printing and Additive Manufacturing" 4th Edition (2014), published by World Scientific Publishing Co.

A powder composition of, or comprising, the titanium alloy of the present invention, suitable for use in an additive manufacturing process or a powder-based manufacturing process for the production of gas turbine engine components, typically has a powder particle size (diameter) distribution that lies between about 10 and about 250 μm, and the particles are typically of substantially spherical shape.

The powder particle size distribution (PSD) required will vary dependent on the process employed. For example, with field assisted sintering (FAST) any PSD can be used, including, e.g. PSD ranges from < 45 microns to > 250 microns in several increments. It has been found that with a smaller PSD the FAST conditions (time and temperature) required for achieving a homogeneous mix can be reduced due to the smaller diffusion distances required, and vice-versa. However, when using an additive manufacturing (AM) process, stricter PSD limits tend to apply, depending on the specific process, a PSD in the region of 10 to 60 microns may be used.

In some embodiments the titanium alloy is in a physical form that is suitable for use in a manufacturing process selected from laser-based additive manufacturing (LBAM), direct laser deposition (DLD), Laser powder bed fusion (LPBF), Selective Laser Sintering (SLS) electron beam additive manufacturing (EBAM), laser engineered net shaping (LENS), selective laser melting (SLM), SLM three-dimensional printing (SLM 3D printing), direct metal laser sintering (DMLS), direct metal laser sintering three-dimensional printing (DML 3D printing), electron beam melting (EBM), direct metal deposition (DMD), direct metal tooling (DMT), direct metal tooling three-dimensional printing (DMT 3D printing), construction laser additive direct (CLAD) ion fusion formation (IFF), wire arc additive manufacturing (WAAM), shaped metal deposition (SMD), Laser Blown Powder Directed Energy Deposition (LBP-DED), flash sintering, cold spray and field assisted sintering technology (FAST).

**EXAMPLES**

The titanium alloy of the present invention and its preparation and testing is described in the following illustrative examples with reference to the certain of the accompanying drawings.

**Example 1**

**Preparation of the titanium alloy of the present invention**

A titanium alloy of the present invention was prepared as follows and summarised schematically in **Figure 1**: 4023 g of Ti-6Al-4V in powder form obtained from Timet and 4223 g of Ti-5Al-5V-5Mo-3Cr in powder form obtained from AP&C were added to a powder mixing device and mixed to form a homogenous 50:50 titanium alloy powder mix.

The powder was transferred to a cylindrical graphite mould for processing with field assisted sintering.

The powder was sintered using a field assisted sintering technique in accordance with the parameters set out in Table 1 below.

**TABLE 1**

| Field assisted sintering conditions | |
| --- | --- |
| Dwell Time | 60 minutes |
| Dwell Temperature | 1200°C |
| Pressure | 35 MPa |
| Pulse Pattern | 15 on, 5 off ms |
| Heating Rate | 50 °C/min |
| Cooling Rate | 10 °C/min |
| Mould Diameter | 250 mm |

The resulting product was 8246 g of a solid titanium billet.

**Example 2**

**Composition of the titanium alloy of Example 1**

Three samples of the titanium alloy powder made in accordance with the method described in Example 1 were chemically analysed. The quantity of Ti, Al, V, Mo, Cr and Fe was measured via Inductively Coupled Plasma - Optical Emission Spectroscopy (ICP-OES), the quantity of C and S was measured via combustion analysis and the quantity of N, O and H was measured via Inert Gas Fusion. The results are summarised in Table 2 below.

**TABLE 2**

| Composition of titanium alloy made by Example 1 | | | |
|---|---|---|---|
| Element | Sample 1 | Sample 2 | Sample 3 |
| Ti (wt.%) | 85.34 | 85.6 | 85.29 |
| Al (wt.%) | 5.75 | 5.61 | 5.75 |
| V (wt.%) | 4.52 | 4.43 | 4.54 |
| Mo (wt.%) | 2.52 | 2.51 | 2.53 |
| Cr (wt.%) | 1.47 | 1.43 | 1.47 |
| Fe (wt.%) | 0.19 | 0.19 | 0.2 |
| C (wt.%) | 0.024 | 0.028 | 0.028 |
| S (wt.%) | 0.001 | 0.002 | 0.002 |
| N (ppm) | 260 | 187 | 231 |
| O (ppm) | 1423 | 1536 | 1476 |
| H (ppm) | 47 | 39 | 48 |

The composition may be described as Ti-5.7Al-4.5V-2.52Mo-1.46Cr-0.19Fe.

The measured values for carbon, sulphur, hydrogen, oxygen and nitrogen are all within acceptable limits.

The suitable wt.% of each element to be used using alternative ratios can be determined using ThermoCalc™ thermodynamic modelling software. The measured values for the ratio of 50:50 are close (< 0.05 wt.% error) to the simulated values. The following table,

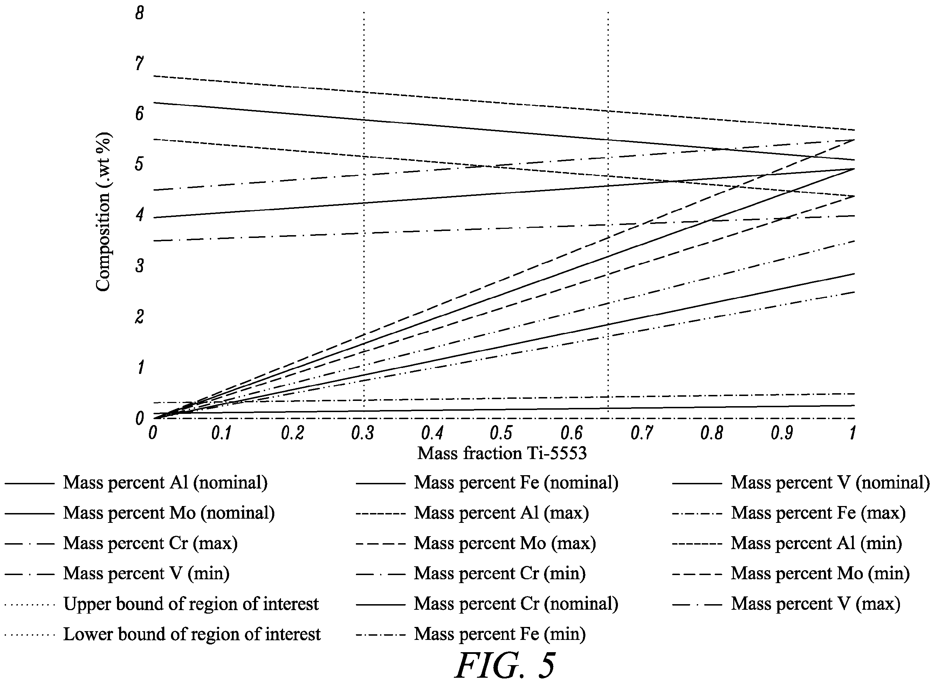

Table 3, containing equations for predicted nominal, max and min compositions as the mix ratio changes. Where $y$ = wt.% and $x$ = mass fraction of Ti-5553. Such compositions are also represented in **Figure 5**.

## TABLE 3

### Predicted nominal, maximum and minimum titanium alloy compositions

| | Element | Equation (y = wt.%, x = mass fraction of Ti-5553, where x = 0.3 to 0.65) |
|---|---|---|
| **Nominal** | Al | y = -1.1x + 6.22 |
| | Fe | y = 0.17x + 0.1 |
| | V | y = 1.01x + 3.95 |
| | Cr | y = 2.857x |
| | Mo | y = 4.94x |
| **Max** | Al | y = -1.05x + 6.75 |
| | Fe | y = 0.2x + 0.3 |
| | V | y = x + 4.5 |
| | Cr | y = 3.5x |
| | Mo | y = 5.5x |
| **Min** | Al | y = -1.1x + 5.5 |
| | Fe | y = 0x |
| | V | y = 0.5x + 3.5 |
| | Cr | y = 2.5x |
| | Mo | y = 4.4x |

**Example 3**

**Tensile strength and tensile elongation of titanium alloys**

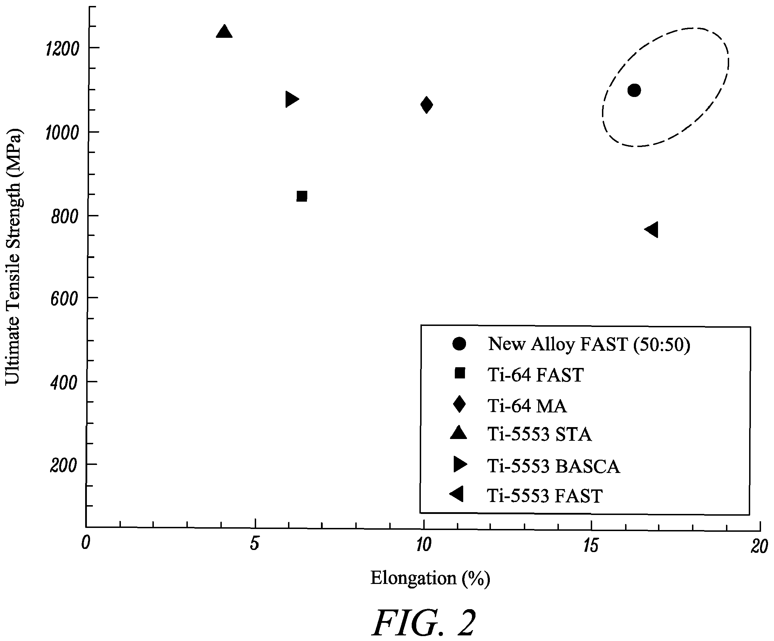

The tensile strength and tensile elongation of a titanium alloy of the present invention and a known titanium alloy, Ti-64, produced using FAST, was determined and compared with those of certain known titanium alloys, Ti-64 MA, Ti-5553 STA and Ti-5553 BASCA. The results are shown in **Figure 2**.

All tensile testing was carried out in conformance with the ASTM E8 standard, with round tensile bars of specimen size 1 selected.

Tensile elongation describes the ductility of the material, i.e. how much deformation can be accommodated prior to fracture, this was measured during the test procedure via means of an extensometer in line with the ASTM E8 standard testing procedure.

The tensile strength and tensile elongation of the titanium alloy of the present invention were determined to be 1107.5 MPa and 16.2 % respectively.

The tensile strength and tensile elongation of Ti-64 FAST, which is Ti-64 produced using Field Assisted Sintering, was determined to be 845.5 MPa and 6.35 % respectively.

Ti-64 MA is a known titanium alloy. It is Ti-64 in the Mill Annealed condition, i.e. a typical heat treatment condition in which titanium is often supplied, e.g. a titanium plate that has been held at 700 °C for 1 to 8 hours. The tensile strength of this alloy is 1069 MPa as disclosed in M. J. Donachie, Titanium - A Technical Guide, 2nd ed., vol. 99, no. 5. ASM International, 2000. The tensile elongation of this alloy is 10.0 % as disclosed in M. J. Donachie, Titanium - A Technical Guide, 2nd ed., vol. 99, no. 5. ASM International, 2000.

Ti-5553 STA is a known titanium alloy. It is Ti-5553 in the Solution Treated and Aged (STA) condition, STA referring to a heat treatment which is designed to optimise for high strength. Typically, this heat treatment involves holding at a temperature below the beta transus temperature followed by a water quench. An ageing treatment is then carried out at a temperature in the region of 500 to 700 °C to generate fine alpha precipitates. The tensile strength of this alloy is 1240 MPa as disclosed in J. D. Cotton et al., "State of the Art in Beta Titanium Alloys for Airframe Applications," Journal of Materials, vol. 67, no. 6, pp. 1281-1303, 2015. The tensile elongation of this alloy is 4.0 % as disclosed in J. D. Cotton et al., "State of the Art in Beta Titanium Alloys for Airframe Applications," Journal of Materials, vol. 67, no. 6, pp. 1281-1303, 2015.

Ti-5553 BASCA is a known titanium alloy. It is Ti-5553 in the Beta-Annealed Slow Cooled and Aged condition (BASCA), BASCA) referring to a heat treatment that is designed for optimised fracture toughness properties. Typically, this heat treatment involves heating to a temperature of 20 to 60 °C above the beta transus temperature, for at least 1 hour, followed by controlled cooling to 650 to 800 °C and holding for at least one hour before a furnace cool. The tensile strength of this alloy is 1080 MPa as disclosed in J. D. Cotton et al., "State of the Art in Beta Titanium Alloys for Airframe Applications," Journal of Materials, vol. 67, no. 6, pp. 1281-1303, 2015The tensile elongation of this alloy is 6.0% as disclosed in J. D. Cotton et al., "State of the Art in Beta Titanium Alloys for Airframe Applications," Journal of Materials, vol. 67, no. 6, pp. 1281-1303, 2015.

The results show that the titanium alloy of the present invention has a greater combination of tensile strength and tensile elongation than any of the known titanium alloys.

The dashed ellipse shown in Figure 2 indicates a region of excellent tensile toughness and excellent tensile elongation, i.e. for suitability as a material from which to manufacture gas turbine engines components, including turbine blades and stators. The tensile strength and tensile elongation of the titanium alloy of the present invention fall within that region.

**Example 4**

**Molybdenum equivalence of titanium alloys**

The molybdenum equivalence (MoE) of a titanium alloy of the present invention was determined using the following equation:

$$MoE = 1.0(wt.\% \, Mo) + 0.67(wt.\% \, V) + 0.44(wt.\% \, W) + 0.28(wt.\% \, Nb) + 0.22(wt.\% \, Ta)$$
$$+ 2.9(wt.\% \, Fe) + 1.6(wt.\% \, Cr) + 1.25(wt.\% \, Ni) + 1.7(wt.\% \, Mn)$$
$$+ 1.7(wt.\% \, C) - 1(Al - eq)$$

$$Al - eq = (wt.\% \, Al) + wt.\% \, \frac{Zr}{6} + wt.\% \, \frac{Sn}{3} + 10(wt.\% \, O + wt.\% \, N)$$

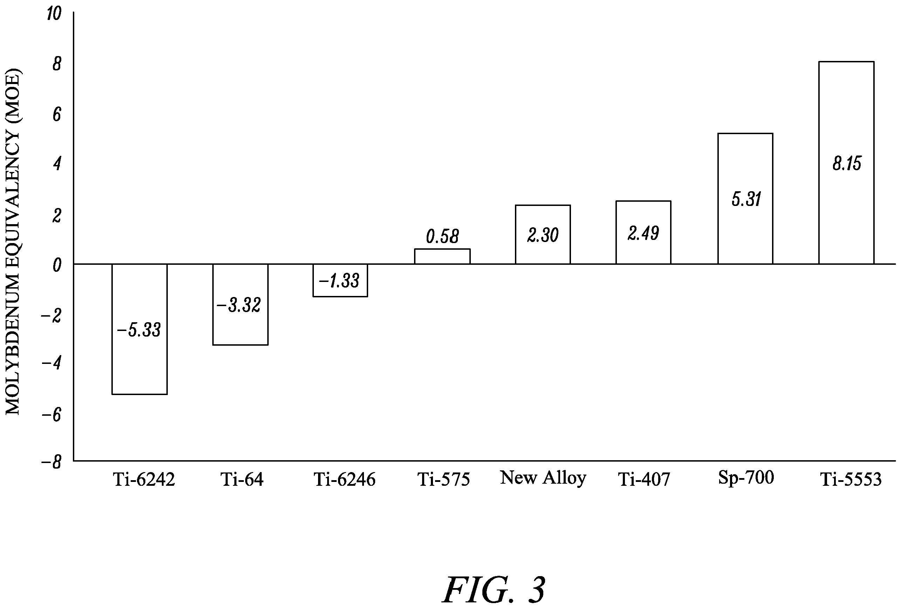

where: and compared with those of certain known titanium alloys, Ti-6242, Ti-64, Ti-6246, Ti-575, Ti-407, SP-700 and Ti-5553. The results are shown in **Figure 3.**

The molybdenum equivalence of an alloy allows the effect of different elements on the stabilisation of the beta phase to be compared by normalising them to a baseline of molybdenum. The amount of each element required to maintain 100% vol. of metastable-beta-phase when quenched to room temperature whilst preventing formation of martensitic phases is normalised against the same critical concentration for molybdenum, to provide the coefficients seen in the above equation. It therefore indicates the relative beta stability of an alloy.

Ti-6Al-2Sn-4Zr-2Mo-0.08Si or Ti-6242 is a known titanium alloy that is commercially available from AP&C. It is a near-alpha alloy that combines high mechanical strength, weldability, high temperature stability and creep resistance up to temperatures of 550°C. It is used to manufacture lightweight production parts where high temperature stability is critical, including gas turbine engine components for example turbine components and afterburner structures.

Ti-6Al-4V or Ti-64, as mentioned previously, is a known titanium alloy that is available in powder form from a range of commercial atomisation companies, including, but not limited to AP&C, Tekna and Carpenter Additive.

TI-6Al-2Sn-4Zr-6Mo or Ti-6246 is a known titanium alloy that is commercially available from Smiths Metal Centres Limited. It is an alpha-beta titanium alloy with very high mechanical strength up to 460°C and high corrosion resistance. It is used to manufacture precision racing engine parts and gas turbine engine components.

Ti-5.3Al-7.7V or Ti-575 is a high strength forgeable alpha-beta titanium alloy developed by Titanium Metals Corporation (TIMET). It has a comparable density, beta transus temperature and processing characteristics to Ti-6Al-4V but with improved static and fatigue strength. It was developed primarily for GTE disc or blade applications.

Ti-3.9V-0.85Al or Ti-407 is a highly impact resistant beta-rich alpha-beta alloy with a combination of high ductility and moderate strength, developed by TIMET. The alloy has properties similar to that of Ti-6Al-4V or Ti-3Al-2.5V, however it is significantly easier to process and machine. The alloy was developed as a replacement for Ti-64 in engine casing applications.

Ti-4.5Al-3V-2Fe-2Mo or SP-700, is a beta-rich alpha-beta alloy developed by NKK Corporation, Japan in the early 1990's. The alloy was designed to offer strength and superplastic formability advantages over Ti-6Al-4V. The alloy finds use in demanding components such as airframes, premium automotive engines and golf club faces.

Ti-5Al-5V-5Mo-3Cr or Ti-5553, as mentioned previously, is a known titanium alloy that is commercially available in powder form from AP&C and GKN Additive Materials. It is a heat treatable metastable beta titanium-alloy with high strength and low density that has been investigated for use in the aerospace, automotive and biomedical industries.

The results show the molybdenum equivalence of the titanium alloy of the present invention is higher than that of Ti-6242, Ti-64 Ti-6246 and Ti-575 but lower than that of Ti-407, SP-700 and Ti-5553. The molybdenum equivalence provides the classifications of alloys i.e. alpha, near-alpha, alpha + beta, beta-rich alpha + beta etc.. The titanium alloy of the present invention falls within the beta-rich, alpha + beta classification region (MoE = 0 - 5 (approx.)). This indicates that it is more beta stabilised than many of the currently used titanium alloys, but it is not as heavily stabilised as a beta alloy such as Ti-5553, which is typically used in more high strength structural applications rather than a gas turbine engine, e.g. landing gear forgings. The molybdenum equivalence is similar to that of Ti-407.

**Example 5**

**Preparation of the titanium alloy of the present invention**

Titanium alloy powders of various ratios of Ti-6Al-4V and Ti-5Al-5V-5Mo-3Cr were manufactured using field assisted sintering technology. The parts were sectioned and the Vickers Hardness of each was measured using a standard Vickers hardness indenter with a load of 30 kgf, in accordance with the ASTM E92 standard.

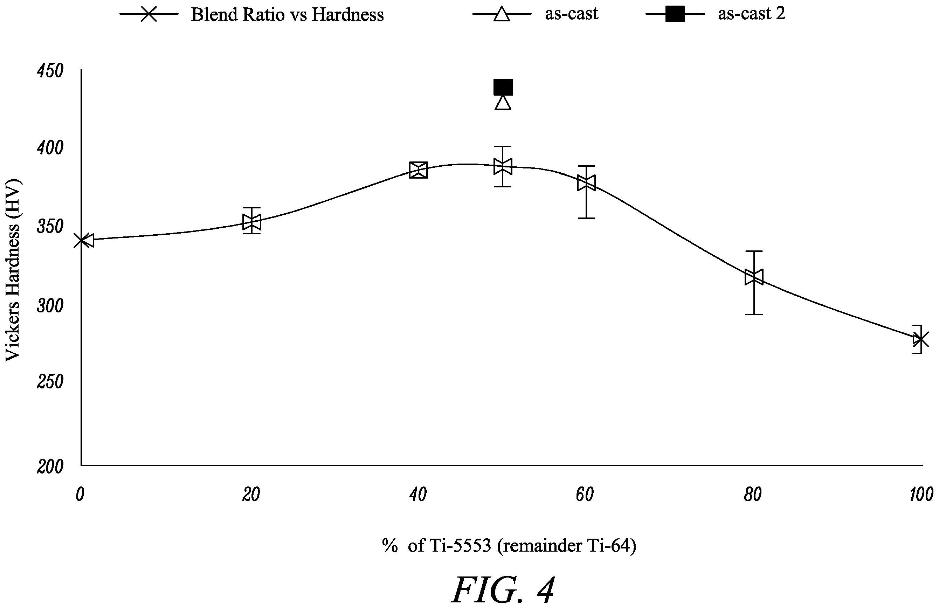

The results are provided in Table 4 below and graphically represented in **Figure 4**.

**TABLE 4**

| Hardness of titanium alloys of Ti-6Al-4V and Ti-5Al-5V-5Mo-3Cr | | |
| --- | --- | --- |
| **% Ti-6Al-4V** | **% Ti-5Al-5V-5Mo-3Cr** | **Vickers Hardness (HV)** |
| 100 | 0 | 341.5 ± 16 |
| 80 | 20 | 352.8 ± 8.2 |
| 60 | 40 | 386.3 ± 5.3 |
| 50 | 50 | 388.9 ± 11.9 |
| 40 | 60 | 378.4 ± 21.4 |
| 20 | 80 | 318.1 ± 24.1 |
| 0 | 100 | 278.4 ± 7.6 |

These results show the 50:50 mix provided the titanium alloy of greatest hardness, then the 60:40 mix and then the 40:60 mix.

**Example 6**

**Tensile toughness of the titanium alloy**

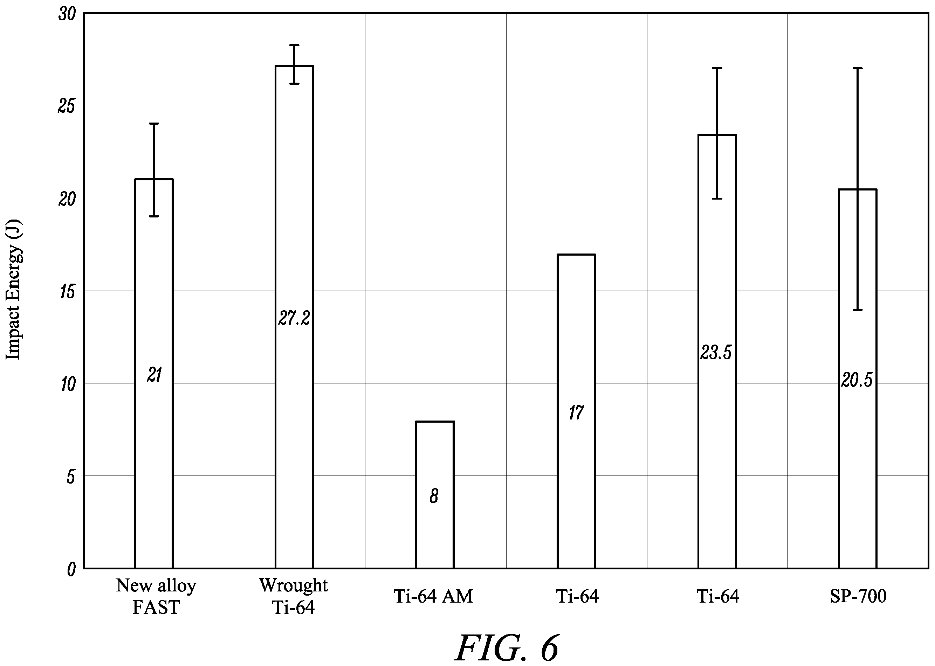

Charpy impact energy values of a titanium alloy of the present invention were measured and compared with those of certain known titanium alloys, e.g. Ti-64 in various conditions and SP-700. The results are shown in **Figure 6**.

**Example 7**

**Manufacture of a titanium alloy article e.g. a gas turbine engine component**

A turbine blade for a high pressure turbine of a gas turbine engine is prepared by casting the turbine blade from the titanium alloy prepared in Example 1.

**Example 8**

**Manufacture of a titanium alloy article e.g. a gas turbine engine component**

A turbine blade for a high pressure turbine of a gas turbine engine is prepared by additive layer manufacturing using the titanium alloy prepared in Example 1.

**Claims**

1. A titanium alloy comprising the following composition:

   | | |
   |---|---|
   | Al | 4.78 to 6.44 wt.%; |
   | V | 3.65 to 5.15 wt.%; |
   | Mo | 1.32 to 3.58 wt. %; |
   | Cr | 0.75 to 2.28 wt.%; |
   | Fe | 0.00 to 0.42 wt.%; |
   | C | 0.00 wt.% to 0.10 wt.%; |
   | S | 0.00 wt.% to 0.10 wt.%; |
   | N | up to 500 ppm; |
   | O | up to 2000 ppm and |
   | H | up to 150 ppm; |

   the balance being Ti and incidental elements and unavoidable impurities.

2. The titanium alloy of claim 1, comprising the following composition:

   | | |
   |---|---|
   | Al | 4.84 to 6.33 wt.%; |
   | V | 3.90 to 5.10 wt.%; |
   | Mo | 1.76 to 3.30 wt. %; |
   | Cr | 1.00 to 2.10 wt.%; |
   | Fe | 0.00 to 0.42 wt.%; |
   | C | 0.01 wt.% to 0.10 wt.%; |
   | S | 0.00 wt.% to 0.10 wt.%; |
   | N | up to 500 ppm; |
   | O | up to 2000 ppm and |
   | H | up to 150 ppm; |

   the balance being Ti and incidental elements and unavoidable impurities.

3. The titanium alloy of claim 1, comprising the following composition:

   | | |
   |---|---|
   | Al | 4.95 to 6.23 wt.%; |
   | V | 3.75 to 5.00 wt.%; |
   | Mo | 2.20 to 2.75 wt.%; |
   | Cr | 1.25 to 1.75 wt.%; |
   | Fe | 0.00 to 0.40 wt.%; |
   | C | 0.01 wt.% to 0.10 wt.%; |
   | S | 0.001 wt.% to 0.10 wt.%; |
   | N | up to 500 ppm; |
   | O | up to 2000 ppm and |
   | H | up to 150 ppm; |

   the balance being Ti and incidental elements and unavoidable impurities.

4. The titanium alloy of any preceding claim, wherein the titanium alloy is in a physical form that is suitable for use in a powder-based manufacturing process, optionally hot isostatic pressing (HIP) or metal injection moulding (MIM).

5. The titanium alloy of any preceding claim, wherein the titanium alloy is in a physical form that is suitable for use in an additive manufacturing process.

6. A titanium alloy article that comprises the titanium alloy of any preceding claim.

7. The titanium alloy article of claim 6 that is a gas turbine component.

8. The titanium alloy article of claim 7, wherein the gas turbine component is a compressor disk, a bladed disk, a casing, a turbine blade or a stator.

9. A method of preparing a titanium alloy of any one of claims 1 to 5, the method comprising:

   combining Ti-6Al-4V and Ti-5Al-5V-5Mo-3Cr in powder form in a ratio of 40:60 to 60:40 to form a titanium alloy powder blend; and
   sintering the titanium alloy powder blend to form a titanium alloy of any one of claims 1 to 5.

10. The method of claim 9, wherein the Ti-6Al-4V and the Ti-5Al-5V-5Mo-3Cr are combined in a ratio of 45:55 to 55:45.

11. The method of claim 11, wherein the Ti-6Al-4V and the Ti-5Al-5V-5Mo-3Cr are combined in a ratio of 50:50.

12. The method of any one of claims 9 to 11, wherein the titanium alloy powder blend is sintered using a field assisted sintering technique.

13. The method of claim 12, wherein the titanium alloy powder blend is sintered using a pressure of 35 MPa, a heating rate of 25 to 200 °C/min, and a colling rate of 10 to 200 °C/min.

14. A method of preparing a titanium alloy of any one of claims 1 to 3, the method comprising:

    combining the elements in the amounts of any one of claims 1 to 3; and
    casting the combination to form a titanium alloy of any one of claims 1 to 3.

15. A method of manufacturing a titanium alloy article of any one of claims 6 to 8, the method comprising casting the article from a titanium alloy in solid form of any one of claims 1 to 5, or applying energy to a titanium alloy in powder form in an additive manufacturing process.

FIG. 1

FIG. 2

Ultimate Tensile Strength (MPa)

Elongation (%)

New Alloy FAST (50:50)
Ti-64 FAST
Ti-64 MA
Ti-5553 STA
Ti-5553 BASCA
Ti-5553 FAST

**FIG. 3**

% of Ti-5553 (remainder Ti-64)

*FIG. 4*

EP 4 327 964 A1

EP 4 327 964 A1

——— Mass percent Al (nominal)   ——— Mass percent Fe (nominal)   ——— Mass percent V (nominal)

——— Mass percent Mo (nominal)   ------ Mass percent Al (max)   —·—·· Mass percent Fe (max)

—·— Mass percent Cr (max)   — — — Mass percent Mo (max)   ------ Mass percent Al (min)

—·— Mass percent V (min)   —·— Mass percent Cr (min)   — — — Mass percent Mo (min)

········ Upper bound of region of interest   ——— Mass percent Cr (nominal)   —·— Mass percent V (max)

········ Lower bound of region of interest   —·—·· Mass percent Fe (min)

*FIG. 5*

*FIG. 6*

EP 4 327 964 A1

Europäisches
Patentamt

European
Patent Office

Office européen
des brevets

# EUROPEAN SEARCH REPORT

**Application Number**

EP 23 18 7455

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H03 243740 A (NIPPON KOKAN KK) 30 October 1991 (1991-10-30) | 1-3,5-8, 14,15 | INV. B22F3/15 |
| A | * page 235 * <br> * claims 1-3 * <br> * examples A1, C12; table 1 * | 4,9-13 | B22F5/00 <br> B22F5/04 <br> B33Y70/00 <br> C22C1/02 |
| X | ZAFARI AHMAD ET AL: "Hybridisation of microstructures from three classes of titanium alloys", MATERIALS SCIENCE, ELSEVIER, AMSTERDAM, NL, vol. 788, 18 May 2020 (2020-05-18), XP086191299, ISSN: 0921-5093, DOI: 10.1016/J.MSEA.2020.139572 [retrieved on 2020-05-18] | 1-11,15 | C22C1/04 <br> C22C14/00 <br> B22F3/105 |
| Y | * Section 2 * | 12,13 | |
| A | * table 2 * | 14 | |
| X | ZAFARI A ET AL: "Superior titanium from hybridised microstructures - A new strategy for future alloys", SCRIPTA MATERIALIA, ELSEVIER, AMSTERDAM, NL, vol. 173, 9 August 2019 (2019-08-09), pages 61-65, XP085792821, ISSN: 1359-6462, DOI: 10.1016/J.SCRIPTAMAT.2019.07.031 [retrieved on 2019-08-09] | 1-11,15 | **TECHNICAL FIELDS SEARCHED (IPC)** <br><br> B22F <br> B33Y <br> C22C |
| Y | * abstract * | 12,13 | |
| A | * page 61, column 2 * | 14 | |

-/--

The present search report has been drawn up for all claims

| Place of search | Date of completion of the search | Examiner |
|---|---|---|
| The Hague | 8 January 2024 | Neibecker, Pascal |

EPO FORM 1503 03.82 (P04C01)

page 1 of 2

**EP 4 327 964 A1**

Application Number

EP 23 18 7455

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KERMANPUR A ET AL: "Failure analysis of Ti6Al4V gas turbine compressor blades", ENGINEERING FAILURE ANALYSIS, PERGAMON, GB, vol. 15, no. 8, 1 December 2008 (2008-12-01), pages 1052-1064, XP022608243, ISSN: 1350-6307, DOI: 10.1016/J.ENGFAILANAL.2007.11.018 [retrieved on 2007-12-08] * abstract * | 1-15 | |
| Y | CALVERT E L ET AL: "Novel high strength titanium-titanium composites produced using field-assisted sintering technology (FAST)", SCRIPTA MATERIALIA, ELSEVIER, AMSTERDAM, NL, vol. 159, 13 September 2018 (2018-09-13), pages 51-57, XP085498190, ISSN: 1359-6462, DOI: 10.1016/J.SCRIPTAMAT.2018.08.036 * abstract * * page 53, column 1 - column 2 * | 12,13 | |

TECHNICAL FIELDS SEARCHED (IPC)

The present search report has been drawn up for all claims

| Place of search | Date of completion of the search | Examiner |
|---|---|---|
| The Hague | 8 January 2024 | Neibecker, Pascal |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 23 18 7455

This annex lists the patent family members relating to the patent documents cited in the above-mentioned European search report.
The members are as contained in the European Patent Office EDP file on
The European Patent Office is in no way liable for these particulars which are merely given for the purpose of information.

08-01-2024

| Patent document cited in search report | Publication date | Patent family member(s) | Publication date |
|---|---|---|---|
| JP H03243740 A | 30-10-1991 | JP H0819503 B2<br>JP H03243740 A | 28-02-1996<br>30-10-1991 |

For more details about this annex : see Official Journal of the European Patent Office, No. 12/82

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 408313 B1

### Non-patent literature cited in the description

- **SEMIATIN, S.L. ; KNISLEY, S.L ; FAGIN, P.N ; ZHANG, F. ; BARKER, D.R.** Microstructure Evolution during Alpha-Beta Heat Treatment of Ti-6AI-4V. *Metall. Mater. Trans. A Phys. Metall. Mater. Sci,* 2003, vol. 34A, 2377-2386
- **MANDA et al.** Ti-5Al-5Mo-5V-3Cr and similar Mo equivalent alloys: First principles calculations and experimental investigations. *Journal of Applied Research and Technology,* 2017, vol. 15, 21-26
- **N. S. WESTON ; F. DERGUTI ; A. TUDBALL ; M. JACKSON.** Spark plasma sintering of commercial and development titanium alloy powders. *J. Mater. Sci.,* 2015, vol. 50 (14), 4860-4878
- **G S UPADHYAYA.** Powder Metallurgy Technology. Cambridge Int Science Publishing, 1997
- Powder Metallurgy. **R K RAJPUT.** A Textbook of Manufacturing Technology: Manufacturing Processes. 2007
- **P C ANGELO ; R SUBRAMANIAN.** Powder Metallurgy; Science, Technology and Applications. PHI Learning Pvt. Ltd, 2008
- **WB JAMES.** Powder Metallurgy Methods and Applications. ASM Handbook, 2015, 9-19
- **GIBSON ; ROSEN ; STUCKER.** Additive Manufacturing Technologies. Springer, 2015
- **GIBSON et al.** *Directed Energy Deposition Processes,* 245-268
- **C K CHUA et al.** 3D Printing and Additive Manufacturing. World Scientific Publishing Co, 2014
- **M. J. DONACHIE.** Titanium - A Technical Guide. ASM International, 2000, vol. 99
- **J. D. COTTON et al.** State of the Art in Beta Titanium Alloys for Airframe Applications. *Journal of Materials,* 2015, vol. 67 (6), 1281-1303